# EUROPEAN PATENT SPECIFICATION

(11) **EP 2 438 127 B1**
(45) Date of publication and mention of the grant of the patent: **31.07.2013**
(21) Application number: 09785939.1
(22) Date of filing: 04.06.2009
(51) Int. Cl.: C09J 7/02, G09F 3/10

(54) **PRINTABLE REPOSITIONABLE ADHESIVE ELEMENT AND PROCESS FOR THE PRODUCTION THEREOF**
BEDRUCKBARES REPOSITIONIERBARES KLEBEELEMENT UND HERSTELLUNGSVERFAHREN
ÉTIQUETTE IMPRIMABLE REPOSITIONABLE ET SON PROCÉDÉ DE PRODUCTION

(43) Date of publication of application: 11.04.2012
(73) Proprietor: Italgraf S.R.L., 22076 Mozzate (Como) (IT)
(72) Inventor: SERVIDA, Ilaria, I-20158 Milano (MI) (IT); SERVIDA, Maurizo, 22100 Varese (IT); CALDIROLA, Dario, 22076 Mozzate (Como) (IT)
(74) Representative: Lunati & Mazzoni S.r.L.
(86) International application number: PCT/IB2009/005855
(87) International publication number: WO 2010/140017

(56) References cited:
- WO-A2-01/79372
- FR-A1- 2 755 445
- FR-A1- 2 853 323
- DATABASE WPI Week 200263 Thomson Scientific, London, GB; AN 2002-586948 XP002572763 & JP 2002 188072 A (SANYO CHEM IND LTD) 5 July 2002 (2002-07-05)

## Description

### TECHNICAL FIELD OF THE INVENTION

The invention relates to a printable repositionable adhesive, and process for the production thereof, as indicated in the preamble of the independent claims.

In particular the invention concerns an adhesive element and a process suitable for defining printed shaped articles which can be used in the sectors of advertising and commercial promotion, signage, technical information and also in the sector of games and in all sectors requiring stickers that are repositionable, easy to produce, simple to use and have a wide application range. A similar adhesive element is describes in patent application WO-A-01/79372.

### DESCRIPTION OF PREVIOUS ART

Various types of repositionable adhesive elements are known.

Some of the commonest types include stickers, i.e. labels produced by the printing of a laminar support and provided on at least one side with an adhesive substance suitable for permitting non-permanent adhesions.

Stickers are used in the field of advertising and commercial promotion and also as information labels for application on commercial products or their wrappings, and in the form of variously shaped collection figures. They can be attached and detached a certain number of times on different surfaces before permanently losing their adhesive characteristics.

In particular, the laminar support is obtained by cutting sheets of plastic material to size and the adhesive material is obtained by laying a thick layer of fluid adhesive substance on the plastic material and then hot-polymerising said substance at a temperature between approximately 100°C and 150°C in order to give it the desired physical properties.

A drawback of this process is represented by the need to use relatively thick plastic sheets or supports and the specific capacity of the adhesive substance to be stable at said polymerisation temperatures.

The adhesive substance must also be thick enough to provide a uniform covering and not generate defects or waste during the hot-polymerisation.

A further drawback consists in the need to use moulds into which the fluid adhesive substance is poured and stratified on the plastic supports, and also means such as ovens or similar in which to place the moulds in order to hot-polymerise the adhesive layer.

The stickers produced in this way are relatively costly and have an overall thickness in the order of one millimetre or even more.

Therefore a perceptible and substantial thickness, unsuitable in particular for transparent stickers applied for example to screens, mobile phones, windows etc. where the stickers have to integrate completely with the article to which they are applied, without protruding.

The sector of advertising, commercial promotion, signage, technical information etc. furthermore uses adhesive elements that exploit the principle of magnetism. These further adhesive elements have a structure which is of appropriate thickness and variously shaped and is combined, by gluing or other technique suited to the magnetic material, with a piece or a sheet of plastoferrite.

The thickness is therefore relatively substantial and furthermore plastoferrite has the drawback of engaging, in a removable manner, only the ferrous surfaces suitable for being magnetically attracted.

This results in a production and market availability of adhesive elements which differ in various aspects, whereas on the contrary it is desirable for said adhesive elements to have a high level of versatility in terms of both production and use.

The adhesive elements on the market are furthermore generally unsatisfactory because after removal they leave traces or marks on the surfaces to which they were applied. These traces are evident in particular on glass and on polished surfaces and are not always easy to remove.

### SUMMARY OF THE INVENTION

In this situation the technical aim of the present invention is to conceive a printable repositionable adhesive element, and a process for the production thereof, able to substantially remedy the drawbacks cited.

In the context of said technical aim an important object of the invention is to produce an adhesive element and a process able to solve the majority of the problems connected with production and use of the printable repositionable elements in the sector of advertising and commercial promotion, in signage and in technical information.

A further object of the present invention is to produce an adhesive element and a process able to use lower quantities of adhesives with respect to those usually required to produce similar products, and able to permit finer layers of material to be printed and shaped.

A further object of the present invention is to produce an adhesive element able to simulate the aspect of stickers made of magnetic plastic material known as plastoferrite.

Last but not least, a further object of the invention is to make available to the sector operators an adhesive element and a process which are simple, highly versatile in terms of use and inexpensive.

Said technical aim and the objects specified are achieved by a printable repositionable adhesive element and by a process for the production thereof, as claimed in the attached independent claims.

Preferred embodiments are highlighted in the sub-claims.

### BRIEF EXPLANATION OF THE DRAWINGS

The attached drawings illustrate by way of non-limiting example preferred embodiments of an adhesive element and a process for the production thereof.

In particular, in the drawings:
- **Fig. 1** shows schematically a portion of an adhesive element according to the invention;
- **Fig. 2** illustrates, again in a purely schematic manner, some phases of the process for producing rolls of adhesive elements;
- **Fig. 3** highlights a final phase of the process.

### DESCRIPTION OF PREFERRED EMBODIMENTS

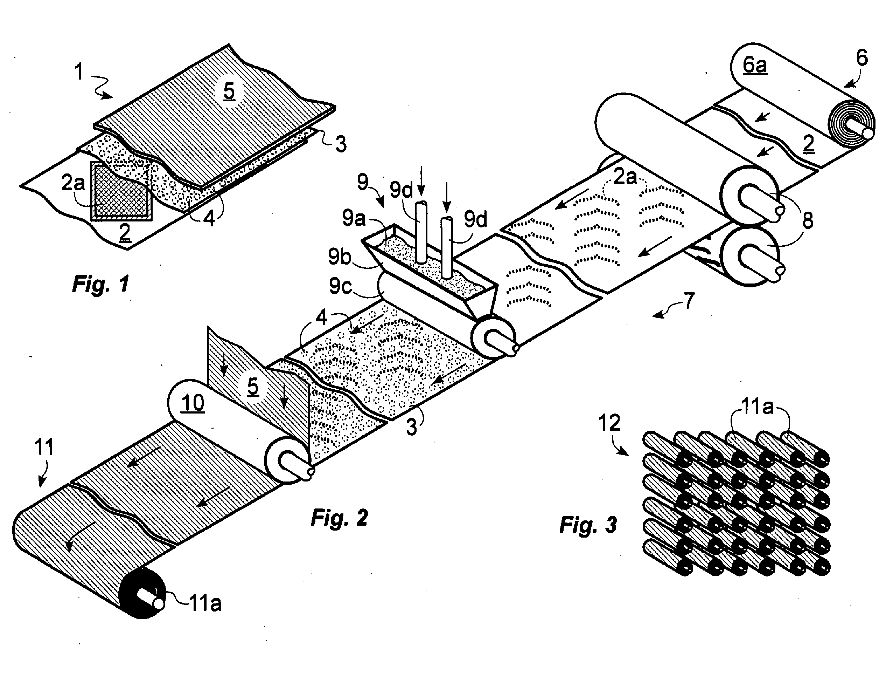

The adhesive element according to the present invention is indicated overall by the number **1.** The same can have various shapes and also the colours or transparencies or decorative motifs can vary: Fig. 1 shows in a purely schematic and indicative manner a cross-section of a portion of an adhesive element 1 having a decoration **2a.**

According to one aspect of the invention, the adhesive element 1 comprises a laminar support **2** made of very fine plastic, for example PET, Polypropylene, Polystyrene, PVC.

The laminar support 2 is for example transparent or, according to the scheduled uses, can be translucent, opaque, semi-opaque or coloured.

In an advantageous embodiment, the support 2 is made of PET and is produced with a maximum thickness of less than 0.3 mm, for example 180 or 280 microns. The support 2 can be printed on at least one face or side, in a per se known manner. If opaque and printed on one side only, the side which will be exposed to view is chosen.

In the case of a transparent support 2 it can be printed on any side or even on both sides.

A very fine adhesive layer **3** advantageously defined by a cold polymerised or cross-linked polyurethane mixture is combined with this support 2 on one side, for example the one opposite the printed side.

The polyurethane mixture is defined by isocyanate and polyol.

Polyol is an organic compound which has in its molecule many hydroxyl groups (-OH). Isocyanate is a functional group **(-N=C=O)** including hexamethyl-1,6-diisocyanate and isophorone-diisocyanate. Polyol and isocyanate can react, generating a polyurethane. As is known, polyurethane is a polymeric substance with several urethane bonds:

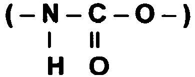

Preferably the polyurethane mixture that produces the adhesive layer 3 is formed of approximately 95 - 100 parts in weight of polyol, and approximately 15 - 25 parts in weight of isocyanate.

The polyurethane mixture of polyol and isocyanate is placed on the laminar support 2 in a quantity preferably between approximately 10 - 40 grams per square metre of said support 2.

The adhesive layer 3 is therefore very fine: in the preferred embodiments it has a thickness of between 0.01 mm and 0.04 mm.

In practice it has been found that each gram of said polyurethane mixture spread over one square metre of the support 2 determines - after cold polymerisation of the mixture - a thickness of the adhesive layer 3 equal to approximately one thousandth of a millimetre.

Overall, therefore, the total thickness defined by the printed support 2 and by the adhesive layer 3 is preferably in the order of approximately 300 microns, i.e. equal to only 0.3 mm, or less.

If useful to increase the commercial appeal of the articles that can be produced according to the invention, the polyurethane mixture defining the adhesive layer 3 can incorporate coloured corpuscles **4** or glitter which are visible if the support 2 is transparent.

The part provided with adhesive layer 3 is covered with a removable protective layer **5** made of plastic, treated paper or other suitable material.

This protective layer 5 can be relatively thick, even approximately 1 mm, since it is completely removed upon application of the adhesive element 1.

It should be noted that said polyurethane mixture according to the invention permits - once polymerised - the formation of an adhesive layer which is not only very fine and substantially invisible but also washable as it is not soluble in water. Furthermore the adhesive layer 3 does not leave unwanted residues on the surfaces from which it is detached, since no plasticizers are used for activation of the adhesive component of the product.

The adhesive elements structured and produced as described above can be applied also on non-reflecting (therefore finely-rough) surfaces, on windows, on television screens and PC monitors and on screens for example of mobile phones, video mobile phones, cameras etc.

The use of a transparent support 2, combined with its reduced thickness, the absence of residues on the "abandoned" surface and the washability of the adhesive part also permit overlapping use, for example for promotional figures, games, images that can be composed and positioned in various ways, also to obtain three-dimensional effects.

On the basis of the invention, stickers can be produced resembling those with magnetic base using a support 2 of the same colour as the traditional magnetic plastic known as plastoferrite used up to now as a support for figures, miniatures etc. for application on ferrous surfaces.

In this way products are obtained similar to those with magnetic base but with a wider fixing range.

For example it will be possible to produce game boards and non-metallic pieces (like travelling magnetic draughts). Previously these games required magnetic elements and metal sheets as game surfaces.

The importance of this is evident if we consider the progressive reduction of metallic surfaces in the domestic environment: even refrigerator doors are now non-metallic.

To better define the above, two examples are given below.

### First example

This example concerns an adhesive element 1 which can be used as a fine sunshade on car windows to protect the inside of the vehicle from the sun's rays. The adhesive element 1 comprises:
- the support 2 made of transparent or semitransparent PET, variously printed;
- the thickness of the support 2 equivalent to approximately 180 microns;
- the polyurethane mixture defined by approximately 98 parts in weight of selected polyol, trade-name Reodek B, and 15 - 20 parts in weight of isocyanate;
- a quantity of polyurethane mixture applied to the support 2 equal to 10-20 grams per square metre of support 2;
- a protective layer 5 arranged on the polyurethane mixture;
- an adhesive layer 3 with thickness of 10-20 microns after cold polymerisation of the polyurethane mixture coated with the protective layer 5.

The product thus defined can constitute a sunshade which when installed, i.e. without the protective layer 5, has a thickness of approximately 0.2 mm. In practice the sunshade is an integral part of the car window.

In the summer, therefore, it can be left on the side windows of a car even if they are raised or lowered repeatedly, without generating any stress or deformation of the window mechanisms.

### Second example

This second example concerns an adhesive element 1 which can be used as an advertising element for application on any surface, even walls, and can advantageously replace the elements using plastoferrite and creating a magnetic contact.

The adhesive element 1 comprises, in this second example:
- the support 2 defined by brown PET, printed on one face;
- the thickness of the support 2 equal to approximately 280 microns;
- the polyurethane mixture defined by approximately 98 parts in weight of selected polyol, trade-name Avantek B, and 20 - 25 parts in weight of isocyanate;
- a quantity of polyurethane mixture applied on the support 2 equal to 30-40 grams per square metre of support 2;
- a protective layer 5 arranged on the polyurethane mixture;
- the adhesive layer 3 with thickness of 30 - 40 microns after cold
polymerisation of the polyurethane mixture coated by the protective layer 5. The product thus defined constitutes an adhesive element which when installed has a thickness of approximately 0.3 mm.

An advantageous and original process is scheduled for producing the adhesive element 1 previously described.

The process is schematised in Fig. 2 and 3 which show that the work phases are performed at least partly in continuous mode and consecutively along a processing line, and also that the polymerisation of the polyurethane mixture defining the adhesive layer 3 is performed cold, while the mixture is coated by the protective layer 5.

In detail, Fig. 2 indicates a delivery station **6** defined for example by a first roll **6a.** The delivery station 6 feeds the laminar support 2 made of plastic, for example PET with a thickness of less than 300 microns.

The first roll 6a is followed by an uninterrupted processing line 7 where the various operations are performed substantially in continuous mode.

The processing line 7 can also operate on separate sheets, fed forward consecutively. In said case the delivery station 6 provides beforehand for cutting of the sheets coming from a continuous flow, or consists in a pile of sheets delivered consecutively.

Immediately downstream of the delivery station 6, in the processing line 7, the printing phase of the support 2 is performed via, for example, a pair of impression cylinders **8.**

Any decorative motif or information 2a can be printed.

Figure 2 shows that the printing is performed on one single face of the support 2, the one engaged by the lower impression cylinder 8. Printing can be performed even if the support 2 is transparent. Printing is not performed if for example the support 2 has its own colour or is semi-transparent and is intended for use as it is. In a subsequent phase the support 2 is combined with a polyurethane mixture 9a which produces an adhesive layer 3.

The polyurethane mixture 9a is supplied for example by means of a dispenser **9** which operates by spraying, pouring or spreading or other.

Only for the purposes of indication, figure 2 shows a dispenser 9 where a container **9b** wets a spreader roller **9c** which is rotating and substantially in contact with the support 2.

A liquid polyurethane mixture 9a is delivered consisting of polyol and isocyanate, selectively fed, as schematically indicated by two channels **9d.**

Preferably the polyurethane mixture 9a is formed by feeding approximately 95 - 100 parts in weight of polyol and approximately 15 - 25 parts in weight of isocyanate.

In particular the dispenser 9 is calibrated to release a quantity of polyurethane mixture 9a preferably between approximately 10 and 40 grams per square metre of the support 2.

It is therefore a very fine layer which simply wets the support 2 and which therefore does not require moulds and similar to contain it or to prevent it overflowing the edges of the support 2.

The layer of polyurethane mixture can be determined and controlled with maximum precision, purely by way of example by varying the rotation speed of the spreading roller 9c.

The polyurethane mixture 9a can incorporate said coloured corpuscles 4, which remain visible if the support 2 is transparent.

In a further phase the fine polyurethane mixture is protected and covered with said removable protective layer 5. The protective layer 5 is applied for example by means of a roller **10,** positioned at a convenient distance from the dispenser 9.

Preferably the phases of unwinding of the support 2 from a first roll 6a, printing of the support 2, application of the polyurethane mixture 9a on the support 2 and coating of the polyurethane mixture 9a with a protective layer 5 are performed in continuous consecutive mode.

A collection station **11,** for example defined by a second roll **11a**, then collects the product produced in the preceding stations.

In the case of adjacent sheets, the same are stacked on top of one another in said collection station 11.

Lastly, the fine polyurethane mixture 9a originally acquires its adhesive characteristics via gradual cold polymerisation or cross-linking, obtained by leaving one or more rolls 11 a or sheets provided with said polyurethane mixture 9a to rest for a set time in a maturing station **12** (Figure 3), while said polyurethane mixture is protected and covered by the protective layer 5.

The time required for cold resting - in particular at ambient temperature - of the polyurethane mixture 9a in the conditions specified is approximately 12 hours. The process can also comprise a phase of die-cutting or cutting (not illustrated) performed upstream or downstream of the maturing station 12.

If the die-cutting is performed upstream also of the collecting station 11, the latter assumes the structure of a container or similar for collection of the adhesive elements 1 already die-cut.

The die-cutting can also consist of a limited incision of the edges of the individual adhesive elements 1, in said case maintaining the overall shape of sheet or roll of the product.

This latter solution - and likewise the complete absence of die-cutting - is expedient when the rolls or sheets produced are sent to purchasers who are not the end users, who directly separate the individual adhesive elements 1, for example to combine them with their products.

The invention achieves the objects proposed and has numerous and important advantages.

One important advantage is the extreme fineness of the support 2 and of the adhesive layer 3, permitted by the adhesive material used and by the cold polymerisation of the same which does not damage the support 2, even if very fine and without resistance to temperatures above 100°C.

A further advantage is the washability of the adhesive layer 3: the washability derives from the fact that said polyurethane mixture 9a and the adhesive layer 3 which is produced are not soluble in water.

The washability of the adhesive part widens the range of surfaces on which the articles produced (stickers, figures, transfers, etc.) can be easily applied, because any filaments that have remained attached to them after application, for example, on an item of clothing or other textile or "fleecy" surfaces can be easily removed by simply rinsing the figure, sticker or label with water, making them immediately reusable.

A further advantage is due to the fact that the adhesive layer 3 does not leave unwanted residues on the surfaces from which it is detached, since no plasticizers are used for activation of the adhesive component.

Cold polymerisation, via which the fine liquid polyurethane mixture 9a assumes the adhesive characteristics and the necessary physical consistency, is very advantageous compared to the usual hot polymerisation since no ovens or heating elements and no moulds or containers are required for the products produced. Furthermore the costs are greatly reduced and the production plants can be relatively simple and with a high production rate.

For example with the continuous process many thousands of square metres of product can be produced per day, with easy accurate control of the process.

A further important factor is that with the process indicated, no toxic vapours or fumes are produced.

## Claims

1. Printable repositionable adhesive element (1), of the type comprising a laminar support (2) made of plastic with a thickness of less than 0.3 mm, an adhesive layer (3) with thickness of between 0.01 mm and 0.04 mm of removable type applied to said support (2) and a protective layer (5) applied in a removable manner to said adhesive layer (3), **characterised in that** said adhesive layer (3) is defined by a cold-polymerised polyurethane mixture between said support (2) and said protective layer (5).

2. Adhesive element as claimed in one or more of the preceding claims, wherein said polyurethane mixture comprises between 95 and 100 parts in weight of Polyol and between 10 and 40 parts in weight of Isocyanate.

3. Adhesive element as claimed in claim 2, wherein said support (2) is made of substantially transparent PET having a thickness of approximately 0.18 mm, and wherein said adhesive layer (3) has a thickness of between 0.01 mm and 0.02 mm and is defined by a cold-polymerised polyurethane mixture comprising substantially 98 parts in weight of Polyol and between 15 and 20 parts in weight of Isocyanate.

4. Adhesive element as claimed in claim 2, wherein said support (2) is made of plastic having the same colour as plastoferrite and a thickness of approximately 0.28 mm, and wherein said adhesive layer (3) has a thickness of between 0.03 mm and 0.04 mm and is defined by a cold-polymerised polyurethane mixture comprising substantially 98 parts in weight of Polyol between 20 and 25 parts in weight of Isocyanate.

5. Adhesive element as claimed in one or more of the preceding claims, wherein said support (2) has at least one printed face.

6. Adhesive element as claimed in one or more of the preceding claims, wherein said adhesive layer (3) incorporates coloured corpuscles (4).

7. Process for producing a printable and repositionable adhesive element (1), comprising a phase of preparation of a plastic laminar support (2), with a thickness of less than 0.3 mm, a phase of formation on said support (2) of an adhesive layer (3) with thickness of between 0.01 mm and 0.04 mm and a phase of application of a protective layer (5) of said adhesive layer (3), **characterised in that** said adhesive layer (3) is formed by applying on said support (2) a polyurethane mixture (9a) and subsequently cold-polymerising said polyurethane mixture (9a) between said support (2) and said protective layer (5).

8. Process as claimed in the preceding claim, wherein said polyurethane mixture (9a) is cold-polymerised by leaving the same at ambient temperature for a time of substantially twelve hours.

9. Process as claimed in one or more of claims 7-8, wherein said polyurethane mixture is formed by mixing between 95 and 100 parts in weight of Polyol and between 10 and 40 parts in weight of Isocyanate.

10. Process as claimed in one or more of claims 7-9, wherein said polyurethane mixture (9a) is applied in quantities of between 10 and 40 grams per square metre of said support (2).

11. Process as claimed in one or more of claims 7-10, wherein said cold-polymerisation is performed on rolls (11a) of said adhesive element (1).

12. Process as claimed in one or more of claims 7-11, wherein said support (2) is delivered from a first roll (6a) and collected at the end in a second roll (11a) combined with said polyurethane mixture (9a) and with said protective layer (5) covering said polyurethane mixture (9a), said cold-polymerisation being performed in a maturing station (12) provided for said roll (11a).

13. Process as claimed in one or more of claims 7-12, wherein a processing line (7) is provided along which at least one phase of feeding of said support (2), one phase of application of a polyurethane mixture (9a) on said support (2) and one phase of coating of said polyurethane mixture (9a) with a protective layer (5) are performed in continuous and consecutive mode.

14. Process as claimed in claim 13 comprising a phase of printing of said support (2) performed before said phase of application of said polyurethane mixture (9a).

## Patentansprüche

1. Bedruckbares und repositionierbares Klebeelement (1) des Typs, der einen laminaren Träger (2) aus Kunststoff mit einer Stärke von weniger als 0,3 mm umfasst, eine Klebeschicht (3) mit einer Stärke zwischen 0,01 mm und 0,04 mm, die entfernt werden kann und an dem genannten Träger (2) befestigt ist und eine Schutzschicht (5), die beweglich an der genannten Klebeschicht (3) angebracht ist und **dadurch gekennzeichnet ist, dass** die Klebeschicht (3) von einer Polyurethanmischung definiert wird, die kalt zwischen dem genannten Träger (2) und der genannten Schutzschicht (5) polymerisiert ist.

2. Klebeelement nach einem oder mehreren der vorangegangenen Ansprüche, bei dem die genannte Polyurethanmischung zwischen 95 und 100 Massenanteile Polyol und zwischen 10 und 40 Massenanteile Isocyanat umfasst.

3. Klebeelement nach Anspruch 2, bei dem der genannte Träger (2) aus im Wesentlichen durchsichtigen PET besteht und eine Stärke von ca. 0,18 mm aufweist und bei dem die Klebeschicht (3) ein Stärke zwischen 0,01 mm und 0,02 mm hat und durch eine kalt polymerisierte Polyurethanmischung definiert wird, die im Wesentlichen 98 Massenanteile Polyol mit dem Handelsnamen Reodek B umfasst und zwischen 15 und 20 Massenanteile Isocyanat.

4. Klebeelement nach Anspruch 2, bei dem der genannte Träger (2) aus Kunststoff mit der Farbe von Plastoferrit besteht und eine Stärke von ca. 0,28 mm aufweist und bei dem die Klebeschicht (3) eine Stärke zwischen 0,03 mm und 0,04 mm hat und durch eine kalt polymerisierte Polyurethanmischung definiert wird und im Wesentlichen 98 Massenanteile Polyol mit dem Handelsnamen Avantek B und zwischen 20 und 25 Massenanteile Isocyanat umfasst.

5. Klebeelement nach einem oder mehreren der vorangegangenen Ansprüche, bei denen der genannte Träger (2) mindestens eine bedruckte Seite aufweist.

6. Klebeelement nach einem oder mehreren der vorangegangenen Ansprüche, bei dem die Klebeschicht (3) farbige Körperchen (4) in sich einschließt.

7. Verfahren zur Herstellung eines bedruckbaren und repositionierbaren Klebeelements (1), das eine Phase der Vorbereitung eines laminaren Trägers (2) aus Kunststoff mit einer Stärke von weniger als 0,3 mm umfasst, eine Phase der Bildung einer Klebeschicht (3) auf dem genannten Träger (2) mit einer Stärke zwischen 0,01 mm und 0,04 mm und eine Phase der Aufbringung einer Schutzschicht (5) der genannten Klebeschicht (3), **dadurch gekennzeichnet, dass** die genannte Klebeschicht (3) gebildet wird, indem auf den genannten Träger (2) eine Polyurethanmischung (9a) aufgetragen und die genannte Polyurethanschicht (9a) anschließend zwischen dem genannten Träger (2) und der genannten Schutzschicht (5) polymerisiert wird.

8. Verfahren nach dem vorangegangenen Anspruch, bei dem die genannte Polyurethanmischung (9a) kalt polymerisiert wird, indem für einen Zeitraum von im Wesentlichen zwölf Stunden dieselbe Umgebungstemperatur erhalten wird.

9. Verfahren nach einem oder mehreren der Ansprüche 7 bis 8, bei dem die genannte Polyurethanmischung gebildet wird, indem 95 und 100 Massenanteile Polyol und zwischen 10 und 40 Massenanteile Isocynat gemischt werden.

10. Verfahren nach einem oder mehreren der Ansprüche 7 bis 9, bei dem die genannte Polyurethanmischung (9a) in Mengen zwischen 10 und 40 Gramm pro Quadratmeter des genannten Trägers (2) aufgebracht wird.

11. Verfahren nach einem oder mehreren der Ansprüche 7 bis 10, bei dem die genannte kalte Polymerisierung auf Rollen (11a) des genannten Klebeelements (1) erfolgt.

12. Verfahren nach einem oder mehreren der Ansprüche 7 bis 11, bei denen der genannte Träger (2) von einer ersten Rolle (6a) ausgegeben und am Ende von einer zweiten Rolle (11 a) verbunden mit der genannten Polyurethanmischung (9a) und der genannten Schutzschicht (5) aufgenommen wird, die die genannte Polyurethanschicht (9a) bedeckt, wobei die genannte kalte Polymerisierung in einer Reifungsstation (12) erfolgt, die für die genannte Rolle (11a) vorgesehen ist.

13. Verfahren nach einem oder mehreren der Ansprüche 7 bis 12, bei dem eine Bearbeitungslinie (7) vorgesehen ist, entlang der kontinuierlich und nacheinander mindestens eine Phase der Zuführung dieses Trägers (2) erfolgt, eine Phase der Aufbringung einer Polyurethanmischung (9a) auf den genannten Träger (2) und eine Phase der Beschichtung der genannten Polyurethanmischung (9a) mit einer Schutzschicht (5).

14. Verfahren nach Anspruch 13, bei dem eine Phase des Bedruckens des genannten Trägers (2) vorgesehen ist, die vor der genannten Phase des Aufbringens der genannten Polyurethanschicht (9a) erfolgt.

## Revendications

1. Élément adhésif (1) imprimable et repositionnable, de type comprenant un support (2) laminaire en matière plastique ayant une épaisseur inférieure à 0,3 mm, une couche adhésive (3) ayant une épaisseur comprise entre 0,01 mm et 0,04 mm de type amovible appliqué sur ledit support (2), et une couche de protection (5) appliquée de façon amovible à ladite couche adhésive (3), **caractérisé en ce que** ladite couche adhésive (3) est définie par un mélange polyuréthanique polymérisé à froid entre ledit support (2) et ladite couche de protection (5).

2. Élément adhésif selon une ou plusieurs des revendications précédentes, dans lequel ledit mélange polyuréthanique comprend entre 95 et 100 parties en poids de Polyol et entre 10 et 40 parties en poids d'Isocyanate.

3. Élément adhésif selon la revendication 2, dans lequel ledit support (2) est en PET fondamentalement transparent et ayant une épaisseur de 0,18 mm environ, et dans lequel ladite couche adhésive (3) présente une épaisseur comprise entre 0,01 mm et 0,02 mm et est définie par un mélange polyuréthanique polymérisé à froid et comprenant fondamentalement 98 parties en poids de Polyol dont le nom commercial est Reodek B et entre 15 et 20 parties en poids d'Isocyanate.

4. Élément adhésif selon la revendication 2, dans lequel ledit support (2) est en matière plastique de la couleur de la plastoferrite et ayant une épaisseur de 0,28 mm environ, et dans lequel ladite couche adhésive (3) présente une épaisseur comprise entre 0,03 mm et 0,04 mm et est définie par un mélange polyuréthanique polymérisé à froid et comprenant fondamentalement 98 parties en poids de Polyol dont le nom commercial et Avantek B et entre 20 et 25 parties en poids d'Isocyanate.

5. Élément adhésif selon une ou plusieurs des revendications précédentes, dans lequel ledit support (2) présente au moins une face imprimée.

6. Élément adhésif selon une ou plusieurs des revendications précédentes, dans lequel ladite couche adhésive (3) englobe des corpuscules de couleur (4).

7. Procédé pour la réalisation d'un élément adhésif (1) imprimable et repositionnable, comprenant une phase de préparation d'un support (2) laminaire en matière plastique, ayant une épaisseur inférieure à 0,3 mm, une phase de formation sur ledit support (2) d'une couche adhésive (3) ayant une épaisseur comprise entre 0,01 mm et 0,04 mm et une phase d'application d'une couche de protection (5) de ladite couche adhésive (3), **caractérisé en ce que** ladite couche adhésive (3) est formée en appliquant sur ledit support (2) un mélange polyuréthanique (9a) et en polymérisant à froid par la suite ledit mélange polyuréthanique (9a) entre ledit support (2) et ladite couche de protection (5).

8. Procédé selon la revendication précédente, dans lequel ledit mélange polyuréthanique (9a) est polymérisé à froid en réglant la même température ambiante pour un temps fondamentalement de douze heures.

9. Procédé selon une ou plusieurs des revendications 7-8, dans lequel ledit mélange polyuréthanique est formé en mélangeant entre 95 et 100 parties en poids de Polyol et entre 10 et 40 parties en poids d'Isocyanate.

10. Procédé selon une ou plusieurs des revendications 7-9, dans lequel ledit mélange polyuréthanique (9a) est appliqué en quantités comprises entre 10 et 40 grammes par mètre carré dudit support (2).

11. Procédé selon une ou plusieurs des revendications 7-10, dans lequel ladite polymérisation à froid est effectuée sur des rouleaux (11a) dudit élément adhésif (1).

12. Procédé selon une ou plusieurs des revendications 7-11, dans lequel ledit support (2) est débité par un premier rouleau (6a) et collecté à la fin sur un second rouleau (11 a) associé audit mélange polyuréthanique (9a) et à ladite couche de protection (5) recouvrant ledit mélange polyuréthanique (9a), ladite polymérisation à froid étant effectuée dans une station de maturation (12) prévue pour ledit rouleau (11 a).

13. Procédé selon une ou plusieurs des revendications 7-12, dans lequel est prévue une ligne de travail (7) le long de laquelle on a réalisé en continu et consécutivement entre elles au moins une phase d'alimentation dudit support (2), une phase d'application d'un mélange polyuréthanique (9a) sur ledit support (2), et une phase de revêtement dudit mélange polyuréthanique (9a) d'une couche de protection (5).

14. Procédé selon la revendication 13, dans lequel est prévue une phase d'impression dudit support (2) effectuée avant ladite phase d'application dudit mélange polyuréthanique (9a).
